# Europäisches Patentamt

## European Patent Office

## Office européen des brevets

(19)

(11) Veröffentlichungsnummer: **0 008 055 B1**

(12) **EUROPÄISCHE PATENTSCHRIFT**

(45) Veröffentlichungstag der Patentschrift:
24.03.82

(21) Anmeldenummer: 79102704.8

(22) Anmeldetag: 30.07.79

(51) Int. Cl.³: **C 07 C 155/10** // C08K5/40, C08L9/00

(54) Verfahren zur Herstellung von Di-(N-methyl-N-phenyl-thiuram)-disulfid.

(30) Priorität: 10.08.78 DE 2835068

(43) Veröffentlichungstag der Anmeldung:
20.02.80 Patentblatt 80/4

(45) Bekanntmachung des Hinweises auf die Patenterteilung:
24.03.82 Patentblatt 82/12

(84) Benannte Vertragsstaaten:
BE DE FR GB IT NL

(73) Patentinhaber: **BAYER AG, Zentralbereich Patente, Marken und Lizenzen, D-5090 Leverkusen 1, Bayerwerk (DE)**

(72) Erfinder: **Barnikel, Carl-Dieter, Dr., Rybniker Strasse 10, D-5000 Köln 80 (DE)**

(56) Entgegenhaltungen:

DE-A1-2 725 165
DE-A1-2 725 166
DE-C-444 014
DE-C-462 418
GB-A-437 653

K. F. HEINISCH «Kautschuk-Lexikon»
2. Auflage, 1977, A. W. GENTNER-VERLAG Stuttgart, S. 168
Houben- Weyl, «Methoden der organischen Chemie», Band IX, 1955, G. Thieme, Stuttgart, S. 853

Verfahren zur Herstellung von Di-(N-methyl-N-phenyl-thiuram)-disulfid

Das symmetrische N-Methyl-N-phenyl-thiuramdisulfid wird als Beschleuniger mit leicht verzögerndem Vulkanisationseinsatz sowie als Vernetzer im Kautschuk eingesetzt.

Prinzipiell wird diese Substanz in zwei Arbeitsgängen hergestellt.

In der ersten Reaktionsstufe wird n-Methyl-Anilin mit Schwefelkohlenstoff im Gegenwart von Natronlauge oder Ammoniak oder Calciumhydroxid zum entsprechenden Dithiocarbamat umgesetzt, wobei im letzteren Fall das Calciumsalz mit Natriumsulfat oder Natriumcarbonat noch in das Natriumsalz überführt werden muss.

In der zweiten Stufe wird das Dithiocarbamat oxidativ zum Disulfid umgewandelt. Als Oxidationsmittel werden Chlorlauge, Chlor, Polythionate, Nitritlösung, Kaliumferricyanid, Ammoniumpersulfat oder Wasserstoffsuperoxid u.a. verwandt. Beide Reaktionsstufen werden grundsätzlich in wässriger Phase durchgeführt.

Mit all den bekannten Verfahren sind Nachteile verbunden. Der Einsatz von Kaliumferricyanid z.B. ist zu kostenaufwendig und erfordert eine umfangreiche Aufarbeitung der Mutterlauge. In den übrigen Fällen resultiert eine mangelhafte Ausbeute von 60 bis 70% der Theorie bezogen auf Amin.

Darüber hinaus weist das entsprechende Disulfid einen unzureichenden Reinheitsgrad auf, der sich in einem niedrigen Schmelzpunkt dokumentiert und Werte von 175 bis 180° zeigt.

Weiterhin enthält das Produkt einen Gehalt an freiem Schwefel von über 1%, was sich negativ auf das Alterungsverhalten der mit der Verbindung hergestellten Vulkanisate auswirkt.

Die DE-C 462 418 und DE-C 444 014 beschreiben ein Verfahren zur Herstellung von Di-(N--methyl-N-phenyl-thiuram)-disulfid durch Umsetzung einer entsprechenden Dithiocarbaminsäure mit bestimmten Oxidationsmitteln, wobei die Dithiocarbaminsäure durch Umsetzung von Methyl-Anilin mit Schwefelkohlenstoff hergestellt wurde. Diesen Zitatstellen ist nicht zu entnehmen, dass sowohl der Schwefelkohlenstoff zur Herstellung der Dithiocarbaminsäure, die basische Verbindung und ein Emulgator anwesend sein muss, um in hoher Ausbeute das Endprodukt im reinen Zustand erhalten zu können.

Die GB-A 437 653 offenbart zwar die Anwesenheit eines Emulgators es wird aber ein unterschiedliches Produkt, nämlich Tetramethylthiurammonosulfid hergestellt. Die Herstellung von Tetramethylthiurammonosulfid ist verfahrensmässig nicht mit der Herstellung eines anders substituierten Disulfides zu vergleichen.

Wie bereits erläutert, sind mit den bekannten Verfahren zur Herstellung von Di-(N-methyl-N--phenyl-thiuram)-disulfid Nachteile verbunden, die sich entweder durch eine unbefriedigende Reaktionsausbeute, einen mangelhaften Reinheitsgrad (gekennzeichnet durch niedrigen Schmelzpunkt, Schwefelgehalt, Verfärbung) oder eine unwirtschaftliche Verfahrensweise (kostenintensive Oxidationsmittel, kostenintensive Mahlung des Endproduktes) bemerkbar machen.

Im Falle des Einsatzes von N-Methyl-Anilin als aromatische, wasserunlösliche Substanz ist zur Erzielung eines nahezu quantitativen Umsatzes der Zusatz eines Emulgators erforderlich. Weiterhin ist ein Überschuss an Schwefelkohlenstoff unerlässlich. Durch die Kombination von Einzelmassnahmen wird ein farbliches und korngrössenmässiges Produkt erhalten, das nach der Trocknung keine zusätzlichen Aufarbeitungsmethoden erforderlich macht, und aufgrund seiner Beschaffenheit alle Voraussetzungen als Vulkanisationsbeschleuniger mitbringt, um mit grosser Verarbeitungssicherheit auch für die Herstellung von Gummiwaren, die mit Lebensmittel in Berührung kommen, eingesetzt werden zu können.

Es konnte nun festgestellt werden, dass man das symmetrische N-Methyl-N-phenyl-thiuramdisulfid in einer Ausbeute von über 90% und einem Schmelzpunktbeginn von 188°C mit einem Gehalt an freiem Schwefel von unter 1% erhält, wenn man die Reaktion von N-Methyl-Anilin mit einem geringen Überschuss von Schwefelkohlenstoff in wässriger Phase in Anwesenheit eines Emulgators durchführt, wobei die eingesetzte Base im Überschuss verwendet wird. Nach erfolgter Oxidation mit üblichen Oxidationsmitteln wird die Reaktionsmischung angesäuert und der erhaltene Feststoff abfiltriert.

Die Erfindung betrifft somit ein Verfahren zur Herstellung von Di-(N-methyl-N-phenylthiuram)-disulfid durch Umsetzung von N-Methyl-Anilin mit Schwefelkohlenstoff in Gegenwart von basischen Verbindungen und anschliessender Oxidation mit üblichen Oxidationsmitteln das dadurch gekennzeichnet ist, dass man N-Methyl-Anilin mit einem geringen Überschuss an Schwefelkohlenstoff in wässriger Phase unter Verwendung eines Emulgators umsetzt, wobei die weiterhin zugesetzte basische Verbindung in einem Überschuss eingesetzt wird, nach Beendigung der Oxidation die Reaktionsmischung mit anorganischen und/oder organischen Säuren ansäuert und den erhaltenen Feststoff in üblicher Weise isoliert.

Als Emulgatoren kommen z.B. in Betracht: Alkylbenzylsulfonate, Kondensationsprodukte von Alkylenphenolen, Fettsäuren oder Fettalkoholen mit Alkylenoxyd.

Diese Verbindungen werden, bezogen auf 100 Gew.-Teile N-Methyl-Anilin, bevorzugt in Mengen von 0,1 bis 1, besonders bevorzugt von 0,1 bis 0,3 Gew.-Teilen eingesetzt.

Als basische Verbindung wird bevorzugt Ammoniak in 2- bis 3fachen, bevorzugt von 2- bis 2,5fachen molarem Überschuss, bezogen auf N-Methyl-Anilin, eingesetzt.

Schwefelkohlenstoff wird bevorzugt in 5 bis 15 Mol-%igem, besonders bevorzugt in 5 bis 10 Mol-%igem, Überschuss, bezogen auf N-Methyl-Anilin, eingesetzt.

Das als Dispersionsmedium verwendete Wasser wird bevorzugt in Mengen von 150 bis 200 Gew.-Teilen pro 100 Teile N-Methyl-Anilin verwendet.

Die Umsetzung der ersten Stufe erfolgt bei Temperaturen von 10 bis 30°C, bevorzugt 15 bis 25°C.

Das nach der Umsetzung der ersten Stufe anfallende Dithiocarbamat fällt infolge Überschreitung des Löslichkeitspunktes aus.

Nach Beendigung der nachfolgenden an sich bekannten Oxidationsstufe wird das Reaktionsmedium durch anorganische und/oder organische Säuren wie verdünnte Salzsäure, verdünnte Schwefelsäure oder Essigsäure, bevorzugt bis zu einem pH-Wert von 6, angesäuert und der erhaltene Feststoff in üblicher Weise, beispielsweise durch Filtration, abgetrennt.

Die Umsetzung der zweiten Stufe erfolgt ebenfalls bei Temperaturen von 10 bis 30°C, bevorzugt 15 bis 25°C.

Nach dem erfindungsgemässen Verfahren erhält man ein Produkt mit einem sehr feinen Korn, so dass eine aufwendige Mahlung vermieden werden kann.

Der Erfindungsgegenstand wird durch das nachfolgende Beispiel erläutert, ohne dadurch beschränkt zu werden.

Beispiel 1

In einem 5-l-Sulfierbecher bestückt mit Tropftrichter, Gitterrührer, Thermometer und Kühler, werden 107 g Methylanilin (1 Mol), 200 ml Wasser, 136 g 25 Gew.-% Ammoniak (2 Mol) und 0,2 g Dispergiermittel 2883 (Cyclohexanon-Natriumsulfonatderivat) vorgelegt.

Unter Rühren werden in ca. 3 1/2 Stunden bei 22 bis 25°C 80 g $CS_2$ (1,05 Mol) in die Mischung eingetropft. Über eine Dauer von 12 Stunden wird bei dieser Temperatur nachgerührt.

Nach Verdünnung des Ansatzes mit 900 ml Wasser wird die klare gelbe Lösung mit 75 g $H_2O_2$ 30%ig (1,3 Mol), das auf 250 ml mit Wasser verdünnt wird, in ca. 3 Stunden bei 25°C tropfenweise oxidiert, 1 1/2 Stunden nachgerührt, sodann mit 20%iger $H_2SO_4$ (ca. 170 ml) bis auf einen pH-Wert von 6 angesäuert und 1 1/2 Stunden nachgerührt. Der abgeschiedene Feststoff wird filtriert, mit Wasser gewaschen und getrocknet.

Ausbeute: 166 g = 91,2% der Theorie
Fp.: 188 bis 199°C
freier S: 0,7%
SR 63(*) μ: 0,1%
(*) Siebrückstand auf dem 0,063-mm-Sieb

## Patentansprüche

1. Verfahren zur Herstellung von Di-(N-methyl-N-phenyl-thiuram)-disulfid durch Umsetzung von N-Methyl-Anilin mit Schwefelkohlenstoff in Gegenwart von basischen Verbindungen und anschliessender Oxidation mit üblichen Oxidationsmitteln, dadurch gekennzeichnet, dass man N-Methyl-Anilin mit einem geringen Überschuss an Schwefelkohlenstoff in wässriger Phase unter Verwendung eines Emulgators umsetzt, wobei die weiterhin zugesetzte basische Verbindung in einem Überschuss eingesetzt wird, nach Beendigung der Oxidation die Reaktionsmischung mit anorganischen und/oder organischen Säuren ansäuert und den erhaltenen Feststoff in üblicher Weise isoliert.

2. Verfahren gemäss Anspruch 1, dadurch gekennzeichnet, dass man Schwefelkohlenstoff in 5 bis 15 Mol-%igem Überschuss bezogen auf N-Methylanilin einsetzt.

3. Verfahren gemäss Ansprüchen 1-2, dadurch gekennzeichnet, dass man Schwefelkohlenstoff in 5 bis 10 Mol-%igem Überschuss bezogen auf N-Methylanilin einsetzt.

4. Verfahren gemäss Ansprüchen 1-3, dadurch gekennzeichnet, dass man als basische Verbindung Ammoniak einsetzt.

5. Verfahren gemäss Ansprüchen 1-4, dadurch gekennzeichnet, dass man die basische Verbindung in 2- bis 3fachem molaren Überschuss bezogen auf N-Methylanilin einsetzt.

6. Verfahren gemäss Ansprüche 1-5, dadurch gekennzeichnet, dass man die Reaktionsmischung nach Beendigung der Oxidation bis zu einem pH-Wert von 6 ansäuert.

## Claims

1. A process for the preparation of di-(N-methyl-N-phenyl-thiuram)-disulphide by reacting N-methyl aniline with carbon disulphide in the presence of basic compounds, followed by oxidation using conventional oxidising agents, characterised in that N-methyl aniline is reacted with a small excess of carbon disulphide in the aqueous phase using an emulsifier, the basic compound added being used in excess, in that the reaction mixture is acidified using inorganic and/or organic acids on completion of oxidation and the solid obtained is isolated in the conventional way.

2. A process according to claim 1, characterised in that carbon disulphide is used in an excess of from 5 to 15 mole %, based on N-methyl aniline.

3. A process according to claims 1 and 2, characterised in that carbon disulphide is used in an excess of from 5 to 10 mole %, based on N-methyl aniline.

4. A process according to claims 1 to 3, characterised in that ammonia is used as the basic compound.

5. A process according to claims 1 to 4, characterised in that the basic compound is used in a from two to three-fold molar excess, based on N-methyl aniline.

6. A process according to claims 1 to 5, characterised in that, on completion of oxidation the reaction mixture is acidified to a pH of 6.

## Revendications

1. Procédé pour la préparation de disulfure de bis-(N-méthyl-N-phényl-thiurame) par réaction de la N-méthyl-aniline avec le sulfure de carbone en présence de composés basiques, suivie d'oxydation par des agents oxydants habituels, caractérisé en ce que l'on fait réagir la N-méthyl-aniline avec un faible excès de sulfure de carbone en phase aqueuse en utilisant un émulsionnant, le composé basique ajouté ultérieurement étant utilisé en excès, on acidifie le mélange de réaction après la fin de l'oxydation par des acides inorganiques et/ou organiques et on isole le solide obtenu de la manière habituelle.

2. Procédé selon la revendication 1, caractérisé en ce que l'on utilise le sulfure de carbone en excès de 5 à 15 moles % par rapport à la N-méthyl-aniline.

3. Procédé selon les revendications 1-2, caractérisé en ce que l'on utilise le sulfure de carbone en excès de 5 à 10 moles % par rapport à la N-méthyl-aniline.

4. Procédé selon les revendications 1-3, caractérisé en ce que l'on utilise comme composé basique l'ammoniaque.

5. Procédé selon les revendications 1-4, caractérisé en ce que l'on utilise le composé basique en excès molaire de 2 à 3 fois, par rapport à la N-méthyl-aniline.

6. Procédé selon les revendications 1-5, caractérisé en ce que l'on acidifie le mélange de réaction après la fin de l'oxydation jusqu'à un pH de 6.